# FASCICULE DE BREVET EUROPEEN

(11) **EP 0 962 522 B1**
(45) Date de publication et mention de la délivrance du brevet: **13.08.2003**
(21) Numéro de dépôt: 99110781.4
(22) Date de dépôt: 04.06.1999
(51) Int. Cl.: C12H 1/04

(54) **Utilisation des protéines végétales pour le collage des boissons**
Verwendung von Pflanzenproteinen zur Klärung von Getränken
Use of plant proteins for clarifying beverages

(30) Priorité: 05.06.1998 IT MI981275
(43) Date de publication de la demande: 08.12.1999
(73) Titulaire: ESSECO S.p.A., 28069 S. Martino Di Trecate, Novara (IT); SOFRALAB S.A., 51319 Epernay Cedex (FR)
(72) Inventeur: Boni, Giuliano, 27058 Voghera, Pavia (IT); Gazzola, Massimiliano, 20158 Milano (IT); Sacilotto, Roberto, 20060 Pessano Con Bornago (IT); Scotti, Barbara, 20081 Abbiategrasso, Milano (IT); Gerland, Christophe, 51530 Dizy (FR); Poinsaut, Philippe, 51160 Ay (FR); Lefebvre, Sandrine, 51100 Reims (FR)
(74) Mandataire: Faggioni, Giovanmaria, Dr.

(56) Documents cités:
- GB-A- 2 314 564
- DATABASE WPI Section Ch, Derwent Publications Ltd., London, GB; Class D16, AN 72-47240T XP002097240 & JP 47 026710 B (SHIN-SHIN SHOKURYO KOGYO)
- DATABASE WPI Section Ch, Week 8321, Derwent Publications Ltd., London, GB; Class D16, AN 83-51365K, XP002097241 & SU 943 272 A (C ASIA FOOD IND RES) 15 Juillet 1982
- DATABASE WPI Section Ch, Week 9418 Derwent Publications Ltd., London, GB; Class D16, AN 94-146971 XP002097242 & JP 06 090730 A (KYOWA HAKKO KOGYO KK), 5 avril 1994 (1994-04-05)
- DATABASE WPI Section Ch, Week 9245 Derwent Publications Ltd., London, GB; Class D13, AN 92-368384 XP002097243 & JP 04 267865 A (ASAHI BREWERIES LTD), 24 septembre 1992 (1992-09-24)

## Description

La présente invention se réfère à l'utilisation de protéines d'origine végétale pour le collage des boissons, telles que les jus de fruits, les vins, les moûts, les vinaigres et les bières telle que definie dans les revendications 1-16.

Le collage des boissons de tous les types cités ci-dessus est une pratique utilisée depuis longtemps, par laquelle il est possible d'obtenir des boissons limpides, avec souvent une amélioration également des autres propriétés comme l'odeur, la saveur, la conservation et la stabilité.

En général, pour ce procédé, on utilise une substance solide ou liquide, appelée colle (ou clarifiant), que l'on ajoute au liquide à traiter afin qu'elle intéragisse avec les constituants de la boisson dont on souhaite réduire la teneur (substances responsables de la turbidité ou de l'astringence, comme par example, polyphénols, polysaccharides, ou protéines). Cette interaction entraîne la précipitation de ces constituants. L'élimination du précipité se fait alors, par exemple, par filtration, centrifugation ou décantation et soutirage, et permet d'obtenir une boisson limpide et améliorée dans ses caractéristiques organoleptiques.

Les substances actuellement utilisées pour le collage des boissons sont soit d'origine animale, comme les gélatines, la colle de poisson, les albumines et les caséines, soit d'origine minérale comme les bentonites, les silices et les kaolins. Parmi les colles protéiques, les gélatines sont les substances les plus utilisées pour des raisons économiques et/ou d'efficacité.

Cependant, avec le développement récent de l'encéphalopathie spongiforme bovine (plus couramment connue sous le nom de maladie de la vache folle), on constate une défiance de plus en plus accrue à l'encontre des produits d'origine animale et de plus en plus de producteurs demandent des certificats d'origine des gélatines animales pour confirmer qu'elles ne sont pas issues de bovins.

Dans ce cas-là, la solution alternative la plus adéquat est d'utiliser une gélatine d'origine porcine. Cette solution présente également des problèmes d'acceptabilité, non seulement pour des raisons organoleptiques, mais aussi pour des raisons religieuses dans une partie non négligeable du marché mondial. On ne peut pas non plus exclure des problèmes de maladie pour l'origine porcine (peste porcine).

L'augmentation de ces problèmes a poussé le demandeur à effectuer des recherches pour trouver des alternatives aux colles à base de gélatine animale, considérées jusqu'à aujourd'hui comme irremplaçables.

Les résultats de la recherche effectuée par le demandeur ont mis en évidence l'extraordinaire possibilité d'utiliser, à la place des gélatines, des protéines d'origine végétale pour le collage des boissons.

Cette possibilité n'a pas été réellement explorée à ce jour par les experts du secteur, malgré le coût relativement faible de ce type de produit, probablement parce que l'on pensait que ces protéines n'avaient pas la capacité de floculer dans les boissons, à cause de leur faible solubilité.

Bien qu'il y a des publications comme SU 943272 et JP-B-92 026710 qui décrivent l'utilisation de protéines vegetales particulières dans l'elaboration de boissons, ils ne concernent:
- que des boissons particulières ou des procédés très particuliérs
- que le procédé de clarifications et non pas l'opération complète du collage.

GB-A-2 314 564 décrit l'utilisation de pectine pour la clarification de boissons fermentés

Les protéines végétales proviennent préférentiellement de légumineuses, céréales et oléagineuses, au de tubercules, comme les pommes de terre.

La présente invention est plus particulièrement adaptée au collage des vins.

Selon la présente invention, on peut employer l'une quelconque des protéines végétales pour obtenir le collage des boissons. En général, on choisit la protéine en fonction de la typologie des boissons, de sa destination et de la modification à faire ( physico-chimique et/ou organoleptique).

Les protéines végétales peuvent être employées sous forme solide, en solution ou en suspension, selon leurs caractéristiques et les conditions de collage. Il est également possible d'employer protéines hydrolysées ou dénaturées. Les quantités et les conditions d'utilisation sont variables selon le type et les quantités des substances à éliminer dans la boisson. En général, on utilise de 1 à 100 g de protéine en équivalent poids sec, par hectolitre de boisson à coller. On travaille à des températures comprise entre 0 et 50°C, préférentiellement aux températures des caves (températures ambiantes), pour ne pas endommager la boisson, pendant des temps de contact variables entre quelques minutes et 20 jours.

Pour améliorer l'homogénéité des protéines dans les boissons à coller, on préfère les ajouter sous agitation (par remontage en général).

Les exemples choisis de protéines végétales à utiliser selon la présente invention sont des protéines provenant de légumineuses, céréales ou oléagineuses.

Parmi les protéines de légumineuses, on choisira de préférence les protéines de soja, haricot, lupin, luzerne, féve, pois. Parmi les protéines de céréales, on choisira de préférence les protéines de riz, maïs, seigle, blé, avoine, sorgho. Parmi les protéines oléagineuses, on choisira de préférence les protéines colza, tournesol, lin, arachide.

La présente invention se refèrt même à des protéines qui sont extraites des fruits, en particulier du raisin.

Le mécanisme d'action des protéines végétales dans le collage peut être décrit de la façon suivante : la protéine est ajoutée sous agitation ; aux valeurs du pH acide des boissons (2,8 à 4 pour le vin), elle est chargée positivement . En fonction de sa charge et de son hydrophobicité, elle peut réagir avec les polyphénols et autres substances des boissons, pour donner des produits insolubles. Il y a en conséquence une augmentation initiale de la turbidité de la solution. Ensuite, l'agrégation des coagulats va entraîner la floculation visible par la formation d'un précipité qui va se former sur le fond, et qui laisse le surnageant limpide.

La séparation définitive du précipité dans la boisson va se faire par décantation, centrifugation, filtration ou toute autre méthode connue.

Le collage effectué avec les protéines végétales selon la présente invention donnent plusieurs avantages dont on peut lister les principaux :
1) augmentation de la limpidité
2) amélioration des caractéristiques organoleptiques
3) stabilisation de la boisson
4) amélioration de la filtrabilité (après séparation du précipité)

La présente invention est illustrée plus en détail dans les exemples expérimentaux suivants, donnés à titre exclusivement indicatif et pas du tout limitatif de son domaine (dans son champ d'application).

### Exemple 1 (MOUT)

Les moûts testés proviennent de différentes régions de la CHAMPAGNE et de la région du LUXEMBOURG. Ils sont, en général, sulfités jusqu'à un maximum de 50 g/hl pour éviter le départ en fermentation. Les essais de collage sont réalisés dans des éprouvettes de 200, 250 ou 500 ml et se font à température ambiante.

Chaque série comporte un lot témoin (non traité avec une protéine) et un lot traité avec une gélatine déjà commercialisée (comme par example GELISOL) ou un enzyme de pectinolytique, (comme par example DEPECTIL CLARIFICATION). Avant l'ajout de la protéine, il est nécessaire de mettre du SILISOL qui est un sol de silice liquide à 30 % d'acide silicique. Son action plutôt mécanique permet d'accélérer le processus de clarification. Il s'utilise à la même dose que la protéine. L'agitation se fait par 3 retournements successifs de l'éprouvette.

Les protéines végétales utilisées sont extraites de céréales (blé, riz, avoine), de légumineuses (lupin, pois, luzerne, soja) et d'oléagineuses (colza, tournesol, lin).

Les protéines se présentent pour la plupart sous forme de poudre. Certaines sont sous forme de granulés ou de particules plus ou moins grosses. En général, elles sont partiellement solubles et leur contenu en protéine est variable (35 à 95 %).

Elles sont donc toutes préparées à 10 g/l de protéine et non de poudre et placées sur agitateur magnétique pendant 1 heure et 30 minutes environ. Le prélèvement se fait pendant l'agitation et la solution est injectée à l'aide d'une seringue sur laquelle a été fixée une aiguille. Les doses testées varient entre 5 et 100 g/hl. Pour bien homogénéiser, l'éprouvette est retournée 3 fois. L'éprouvette est couverte pendant la durée du collage.

La suivi du collage se fait par mesure de la turbidité aux temps suivants : 4 h, 24h et 72 h. A 72 h, on mesure la hauteur du dépôt.

### Exemple expérimental 1

Il concerne les essais de collage sur 2 moûts avec les protéines suivantes :
- Gélisol, Dépectil, Albumines totales de pois et Farine de lupin blanc doux sur le moût n°1,
- Gélisol, Albumines totales de pois et Hydrolysat de protéine de blé sur le moût n°2.

Les conditions du collage et les résultats sont présentés dans le tableau 1.

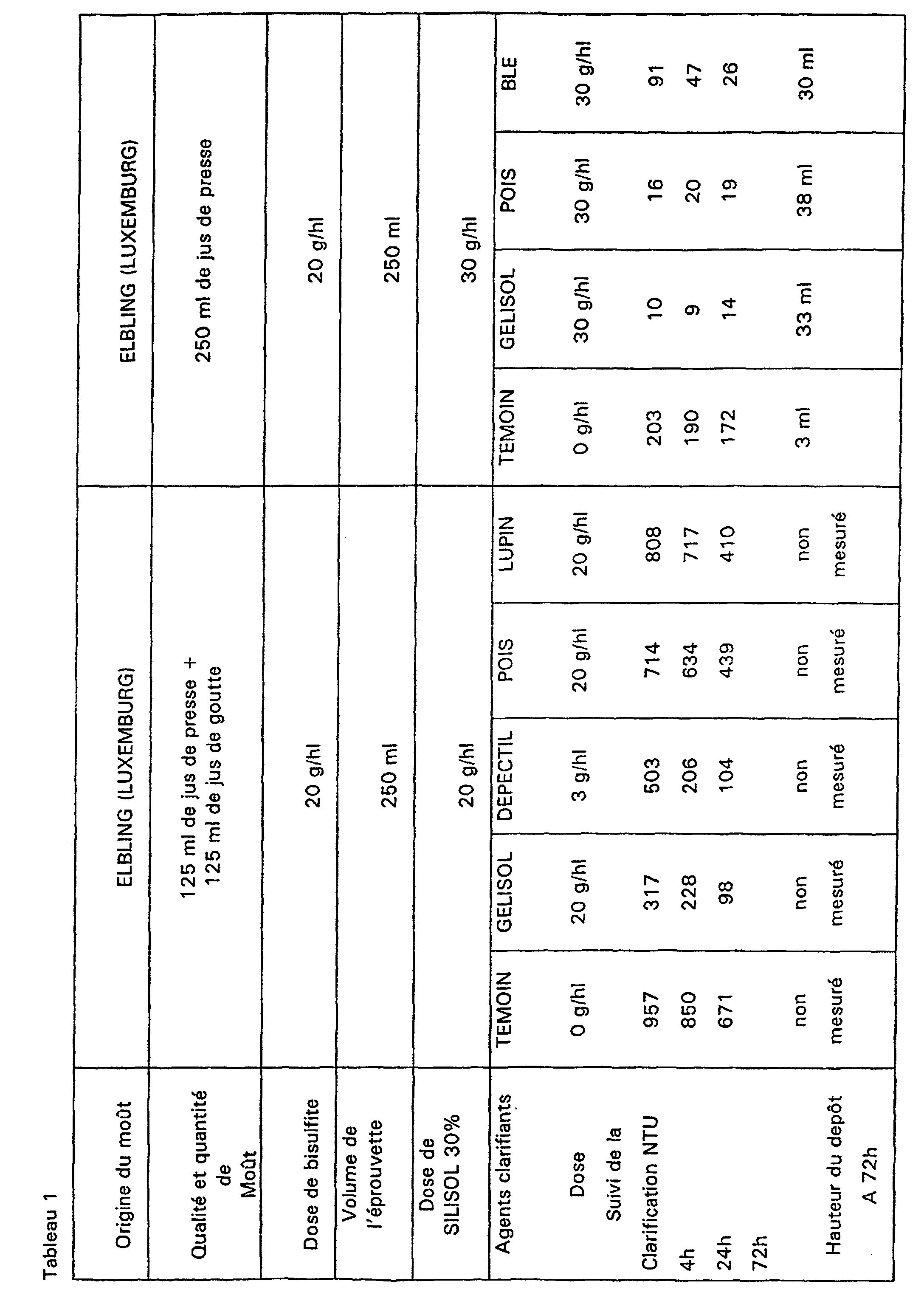

### Exemple 2 (VINS ROUGES)

Les protéines sont principalement testées avec des vins de presse et de goutte de BORDEAUX (AOC). Les résultats sont confirmés avec des vins blancs et rouges provenant de différents cépages et de différentes régions de FRANCE (GERS, ANJOU...)

Le collage se réalise de la même façon que sur un moût, mais en absence de sol de silice. Les essais de collage sont réalisés avec des volumes de vins variant de 20 à 1000 ml dans des éprouvettes de taille adéquate ou dans des cônes de 1 litre pour les grands volumes.

Chaque série comporte un témoin (non traité avec une protéine) et une ou plusieurs gélatines déjà commercialisées comme GELISOL ou SOLUGEL.

Dans le cas des vins, nous utilisons des céréales (blé, riz) et des légumineuses (lupin, luzerne, soja).

Les caractéristiques des protéines sont identiques à celles présentées pour les moûts. Elles sont aussi toutes préparées à 10 g/l de protéine et non de poudre et placées sur agitateur magnétique pendant 1h 30 min environ. Le protocole d'addition est identique à celui réalisé sur les moûts. Les doses testées varient aussi entre 5 et 100 g/hl. Le collage se réalise à température ambiante.

Le suivi de la clarification se fait par mesure de la turbidité aux temps suivants : 4h, 24h, 72h et/ou 96h.

A 72 ou 96 h, on note la hauteur du dépôt et l'aspect du vin. Sur le surnageant filtré sur filtre de cellulose 0,45 µm et dilué au 1/100, on estime la composition phénolique en mesurant la densité optique (DO) à 280 nm. Les DO à 420 nm (composante jaune) et à 520 nm (composante rouge) sont mesurées dans le but de déterminer l'intensité colorante (DO420 + DO 520) et la teinte (DO420 / DO520).

La DO à 620 nm est aussi déterminée (couleur bleue). Ces 3 DO se déterminent sur surnageant filtré mais non dilué.

Après soutirage, les vins sont dégustés. Les dégustations se déroulent en une ou plusieurs fois et se font soit par méthode descriptive comparative soit par test de différence (triangulaire). Le nombre de dégustateurs est variable : 5 à 21. La fiche de dégustation permet de noter les vins entre 1 et 10 sur l'impression tannique (attaque, milieu, fin de bouche et intensité totale) et les qualités des tanins (ronds, herbacés, secs et amers). Lors des épreuves en triangulaire, deux ou trois séries de 3 verres sont présentés à chaque fois selon un ordre différent et aléatoire pour chaque juge. Dans chaque série, 2 verres sont servis avec le même vin différent du 3^{ème}.

L'analyse statistique (analyse de variance ou test unilatéral) est faite sur chaque série au seuil de 5 %.

### Exemple experimental 2

Il concerne les essais de collage sur deux vins avec les protéines suivantes :
- Solugel, Gluten désamidé de blé, farine de lupin blanc doux sur un vin de presse (BORDEAUX, AOC),
- Gélisol, extrait de blé, farine de lupin blanc doux sur un vin de goutte (BORDEAUX, AOC).

Les conditions du collage et les résultats sont présentés dans le tableau 2.

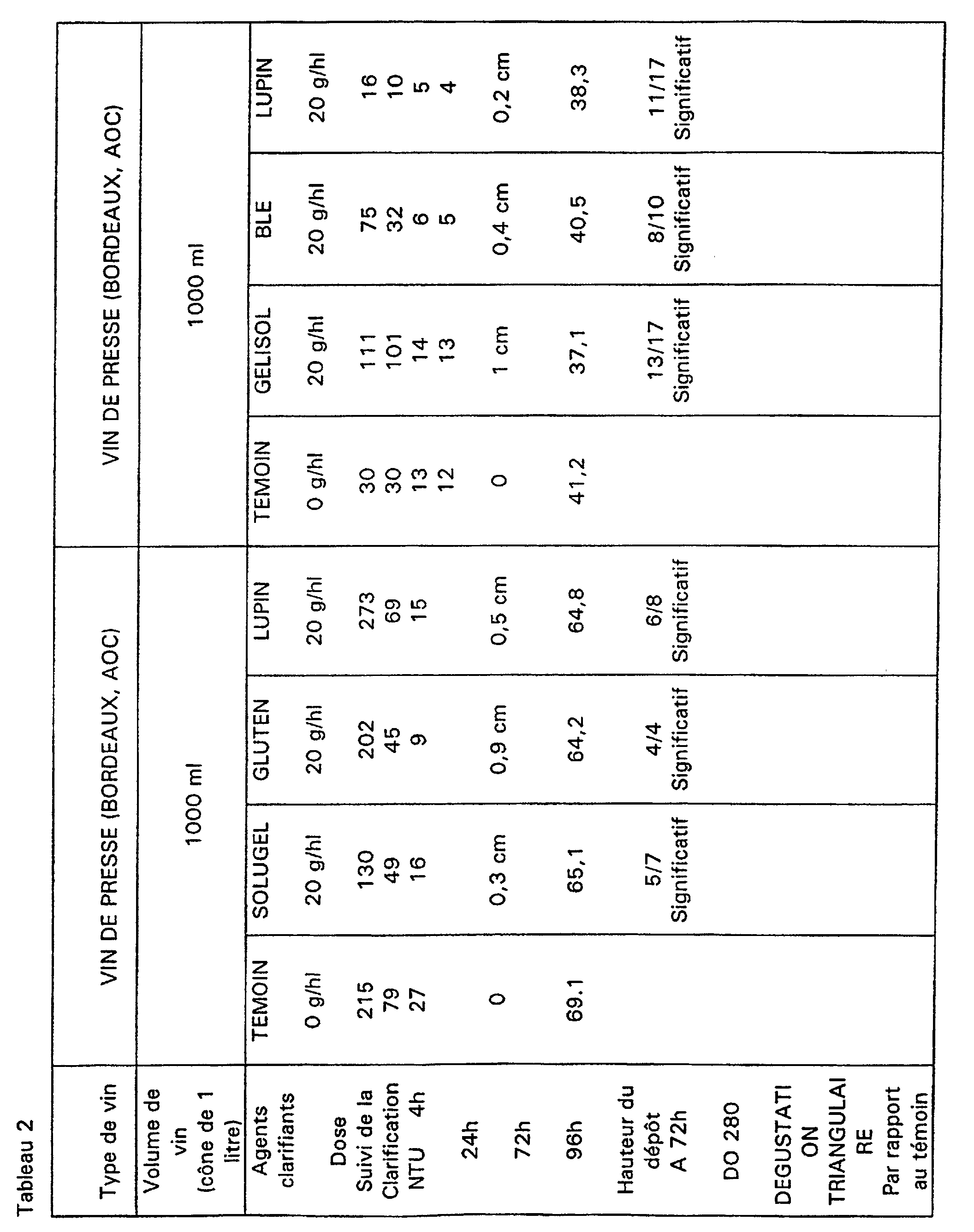

### Exemple 3 (VINAIGRES)

Les vinaigres sont surtout des vinaigres de bière, de cidre, de vins rouges et de vins blancs (vins de Champagne). Pour les vinaigres de cidre et de vin rouge, le collage se réalise comme sur des vins et pour les vinaigres de vin blanc comme sur des moûts, donc en présence de sol de silice. Le volume de vinaigre à coller peut être de 200 à 1000 ml. Les gélatines testées en parallèle sont GELISOL et ALBUMINOCOL pour les vinaigres de vin et ACETOCOL C pour les vinaigres de cidre.

Les protéines végétales sont des céréales (pois, blé), des légumineuses (lupin, luzerne, soja) et des oléagineuses (colza, tournesol).

La technique de collage a été décrite dans les cas des vins et des moûts. La seule différence est que le vinaigre est sulfité avant le collage à la dose de 10 ou de 20 g/hl et un traitement préalable à la bentonite est parfois réalisé. Les doses de protéine varient de 5 à 50 g/hl.

Le suivi de collage concerne uniquement un suivi de clarification par mesure de la turbidité aux temps 4h, 24h et 48h.

### Exemple experimental 3

Sur vinaigres de vin rouge et de vin blanc avec le soja et le pois.

Les conditions du collage et les résultats sont présentés dans le tableau 3.

### Exemple 4 : VINS BLANCS (COMPLEMENT DE COLLAGE : TANIN)

Les vins blancs de table proviennent de la région du VENETO (ITALIE). Les solutions et/ou suspensions de clarifiants ont été préparées à partir de protéines de céréales : riz, maïs, blé et de légumineuses : lupin, luzerne, soja. Les caractéristiques et les protocoles de préparation et d'addition sont déjà cités dans l'exemple 1. Les doses peuvent varier de 5 à 100 g/hl. Les protéines sont utilisées avec un complément de collage qui est un tanin. Le tanin ajouté à des doses comprises entre 1 et 40 g/hl est dissous dans de l'eau à raison de 10 g/l.

Les solutions sont ajoutées selon la séquence suivante :
- ajout du tanin (volume adapté à la dose désirée),
- homogénéisation par 3 retournements successifs de l'éprouvette,
- ajout de la protéine (volume adapté à la dose désirée),
- homogénéisation par 3 retournements successifs de l'éprouvette,

Les températures de collage sont comprises entre 5 et 25 °C et les temps de collage peuvent atteindre 48 heures. Dans ces conditions, il y a formation d'un précipité et augmentation de la limpidité du vin. Un témoin (vin non traité) est ajouté à la série.

Le collage est suivi par mesure de la hauteur du dépôt aux temps 1-2-4-6-8-28-48 h ainsi que par la mesure de la turbidité aux temps 2-4-6-8-28-48 h. A 48 heures, les résultats sont exprimés en pourcentage de baisse de turbidité par rapport à la turbidité du témoin et en pourcentage du volume de dépôt obtenu par rapport à celui du volume de vin traité.

Le vin clarifié est ensuite soutiré et soumis à une évaluation sensorielle pour mettre en évidence les défauts éventuels et/ou les améliorations gustatives.

### Exemple expérimental 4 :

Un vin de table a été soumis au traitement décrit dans l'exemple 4. La turbibité initiale de ce vin est de 70 unités NTU. Les clarifiants utilisés sont des protéines de blé, de soja, de lupin et de maïs. Le tanin est un tanin de châtaignier. Les doses employées sont 10 g/hl de protéine et 7 g/hl de tanin. La température de collage est de 22 âC et le collage a été réalisé dans des éprouvettes de 250 ml.

Les résultats sont présentés dans les tableaux suivants.

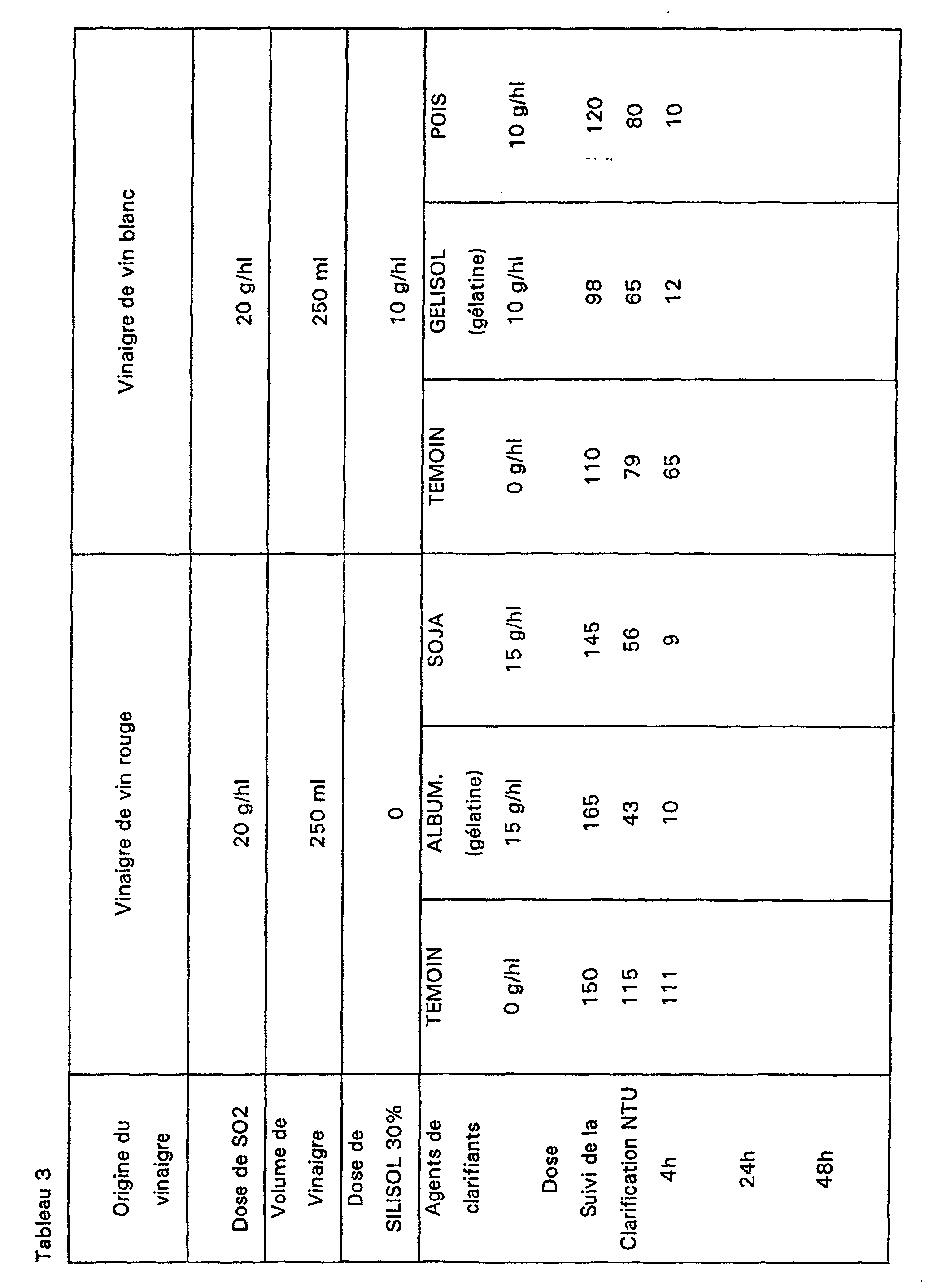

**Tableau 4**

| Hauteur du dépôt en mm. | | | | | |
|---|---|---|---|---|---|
| Temps (h) | Vin témoin | Blé | Soja | Maiz | Lupin |
| 1,00 | 0,00 | 0,00 | 0,00 | 0,00 | 0,00 |
| 2,00 | 0,00 | 0,20 | 0,20 | 0,00 | 0,20 |
| 4,00 | 0,00 | 1,00 | 1,00 | 0,00 | 1,00 |
| 6,00 | 0,00 | 1,50 | 2,00 | 1,00 | 1,00 |
| 8,00 | 0,00 | 1,50 | 2,00 | 1,00 | 1,00 |
| 28,00 | 0,00 | 2,00 | 1,00 | 1,00 | 1,00 |
| 48,00 | 0,00 | 1,50 | 1,00 | 1,00 | 1,50 |

**Tableau 5**

| Turbidité en NTU | | | | | |
|---|---|---|---|---|---|
| Temps (h) | Vin témoin | Blé | Soja | Maiz | Lupin |
| 2,00 | 69,00 | 108,00 | 89,00 | 93,00 | 94,00 |
| 4,00 | 68,00 | 84,00 | 56,00 | 82,00 | 64,00 |
| 6,00 | 65,00 | 66,00 | 46,00 | 61,00 | 54,00 |
| 8,00 | 64,00 | 57,00 | 41,00 | 54,00 | 47,00 |
| 28,00 | 51,00 | 25,00 | 22,00 | 29,00 | 20,00 |
| 48,00 | 40,00 | 18,00 | 16,00 | 22,00 | 12,00 |

**Tableau 6**

| Chute de la turbidité et du volume du dépôt à 48h | | | | |
|---|---|---|---|---|
| | Blé | Soja | Maiz | Lupin |
| Réduction De la turbidité % | 55 | 60 | 45 | 70 |
| Volume des Lies de colle % | 0,55 | 0,4 | 0,4 | 0,55 |

La dégustation donne les résultats suivants :
- aucun échantillon traité n'a montré de défauts gustatifs et olfactifs imputables aux protéines en question,
- tous les vins traités ont montré une meilleure finesse et une astringence inférieure à celle du témoin.

### Exemple expérimental 5 :

Un vin de table a été soumis au traitement décrit dans l'exemple 4. La turbibité initiale de ce vin est de 70 unités NTU. Les clarifiants utilisés sont des protéines de blé, de soja, de lupin et de maïs. Le tanin est un tanin de châtaigner. Les doses employées sont 20 g/hl de protéine et 14 g/hl de tanin. La température de collage est de 22 °C et le collage a été réalisé dans des éprouvettes de 500 ml.

Le relevé de la hauteur de dépôt s'est fait à 1 h, 2 h, 24 h et 48 h et celui de la turbidité à 2 h, 24 h et 48 h. Les résultats sont présentés dans les tableaux suivants.

**Tableau 7:**

| Hauteur du dépôt en mm | | | | | |
|---|---|---|---|---|---|
| Temps (h) | Vin témoin | Blé | Soja | Maiz | Lupin |
| 1,00 | 0,00 | 2,00 | 2,00 | 0,00 | 3,00 |
| 2,00 | 0,00 | 4,00 | 4,00 | 0,00 | 6,00 |
| 24,00 | 0,00 | 4,00 | 3,50 | 2,00 | 2,50 |
| 48,00 | 0,00 | 4,00 | 3,50 | 3,00 | 3,00 |

**Tableau 8:**

| turbidité en NTU | | | | | |
|---|---|---|---|---|---|
| Temps (h) | Vin témoin | Blé | Soja | Maiz | Lupin |
| 2,00 | 61,00 | 79,00 | 65,00 | 133,00 | 69,00 |
| 24,00 | 48,00 | 15,00 | 14,50 | 20,00 | 18,00 |
| 48,00 | 35,00 | 10,00 | 7,00 | 14,00 | 11,00 |

**Tableau 9:**

| Chute de la turbidité et volume du dépôt. | | | | |
|---|---|---|---|---|
| | Blé | Soja | Maiz | Lupin |
| Réduction De la turbidité % | 71 | 80 | 60 | 69 |
| Volume du sédiment % | 1,57 | 1,37 | 1,18 | 1,18 |

La dégustation donne les résultats suivants :
- aucun échantillon traité n'a montré de défauts gustatifs et olfactifs imputables aux protéines en question,
- tous les vins traités ont montré une meilleure finesse et une astringence inférieure à celle du témoin.

### Exemple 5 : VINS BLANCS (COMPLEMENT DE COLLAGE : BENTONITE)

Les vins blancs de table proviennent de la région du VENETO (ITALIE). Les solutions et/ou suspensions de clarifiants ont été préparées à partir de protéines de céréales : riz, maïs, blé et de légumineuses : lupin, luzerne, soja. Les caractéristiques et les protocoles de préparation et d'addition sont déjà cités dans l'exemple 1. Les doses peuvent varier de 5 à 100 g/hl. Les protéines sont utilisées avec un complément de collage qui est une bentonite. La bentonite ajoutée à des doses comprises entre 5 et 100 g/hl est mise à gonfler dans de l'eau pendant 2 heures environ.

Les solutions sont ajoutées selon la séquence suivante :
- ajout de la protéine (volume adapté à la dose désirée),
- homogénéisation par 3 retournements successifs de l'éprouvette,
- attente de 10 minutes,
- ajout de la bentonite (volume adapté à la dose désirée),
- homogénéisation par 3 retournements successifs de l'éprouvette,

Les températures de collage sont comprises entre 5 et 25 °C et les temps de collage peuvent atteindre 48 heures. Dans ces conditions, il y a formation d'un précipité et augmentation de la limpidité du vin. Un témoin (vin non traité) est ajouté à la série.

Le collage est suivi par mesure de la hauteur du dépôt aux temps 1-2-4-8-28-48 h ainsi que par la mesure de la turbidité aux temps 2-4-8-28-48 h. A 48 heures, les résultats sont exprimés en pourcentage de baisse de turbidité par rapport à la turbidité du témoin et en pourcentage du volume de dépôt obtenu par rapport à celui du volume de vin traité.

Le vin clarifié est ensuite soutiré et soumis à une évaluation sensorielle pour mettre en évidence les défauts éventuels et/ou les améliorations gustatives.

### Exemple expérimental 6 :

Un vin de table a été soumis au traitement décrit dans l'exemple 4. La turbibité initiale de ce vin est de 55 unités NTU. Les clarifiants utilisés sont des protéines de blé, de soja, de lupin et de maïs. La bentonite est une bentonite sodique de qualité oenologique. Les doses employées sont 10 g/hl de protéine et 20 g/hl de bentonite. La température de collage est de 22 °C et le collage a été réalisé dans des éprouvettes de 250 ml.

Les résultats sont présentés dans les tableaux suivants

**Tableau 10**

| Hauteur du dépôt en mm | | | | | |
|---|---|---|---|---|---|
| Temps | Vin témoin | Blé | Soja | Maiz | Lupin |
| 1,00 | 0,00 | 2,00 | 4,00 | 2,00 | 4,00 |
| 2,00 | 0,00 | 2,00 | 4,00 | 3,00 | 4,00 |
| 4,00 | 0,00 | 3,00 | 3,50 | 3,50 | 4,00 |
| 8,00 | 0,00 | 3,00 | 4,00 | 3,50 | 4,00 |
| 28,00 | 0,00 | 2,50 | 3,50 | 3,50 | 4,00 |
| 48,00 | 0,00 | 2,50 | 3,00 | 3,00 | 4,00 |

**Tableau 11**

| turbidité en NTU | | | | | |
|---|---|---|---|---|---|
| Temps | Vin témoin | Blé | Soja | Maiz | Lupin |
| 2,00 | 51,00 | 63,00 | 62,00 | 57,00 | 61,00 |
| 4,00 | 51,00 | 54,00 | 56,00 | 51,00 | 57,00 |
| 8,00 | 47,00 | 40,00 | 46,00 | 41,00 | 48,00 |
| 28,00 | 41,00 | 20,00 | 29,00 | 23,00 | 31,00 |
| 48,00 | 29,00 | 11,00 | 20,00 | 14,00 | 19,00 |

**Tableau 12**

| Chute de la turbidité et volume du dépôt | | | | |
|---|---|---|---|---|
| | Blé | Soja | Maiz | Lupin |
| Réduction De la turbidité % | 62 | 31 | 52 | 35 |
| Volume du sédiment % | 0,9 | 1,1 | 1,1 | 1,45 |

La dégustation donne les résultats suivants :
- aucun échantillon traité n'a montré de défauts gustatifs et olfactifs imputables aux protéines en question,
- tous les vins traités ont montré une meilleure finesse et une astringence inférieure à celle du témoin.

## Revendications

1. Utilisation de protéine d'origine végétale pour le collage des boissons d'origine végétale et leurs dérivés fermentés correspondants, characterisée en ce que lesdités proteines sont extraites des légumineuses.

2. Utilisation de protéines selon la revendication 1), **caracterisée en ce que** lesdites légumineuses sont choisies dans le groupe constitué de soja, haricot, fève, lupin, luzerne, pois.

3. Utilisation de protéines d'origine végétale pour le collage des boissons d'origine végétale et leur dérivés fermentés correspondants selon la revendication 1, **caractérisée en ce que** lesdites protéines sont extraites de végétaux choisis dans le groupe constitué de colza, tournesol, lin.

4. Utilisation de protéines d'origine végétale pour le collage de boissons d'origine végétale et leurs derivés fermentés correspondants, **caracterisée en ce que** lesdites protéines sont extraites des tubercules.

5. Utilisation de protéines selon la revendication 4), **caracterisée en ce que** lesdites tubercules sont pommes de terre.

6. Utilisation de protéines d'origine végetale pour le collage des boissons d'origine végétale et leurs derivés fermentés correspondants, **caracterisée en ce que** lesdites protéines sont extraites des fruits.

7. Utilisation de protéines selon la revendication 6), **caracterisée en ce que** lesdits fruits sont choisis dans le groupe constitué de raisin.

8. Utilisation de protéines d'origine végétale selon l'une quelconque des revendications 1) à 7), **caracterisée en ce que** lesdites proteines sont préalabrement hydrolysées ou dénaturées.

9. Utilisation de protéines d'origine végétale selon l'une quelconque des revendications 1) à 8), **caracterisée en ce que** lesdites protéines sont utilisées en mélange de deux ou plus protéines de même sorte.

10. Utilisation de protéines d'origine végétale selon l'une quelconque des revendications précédentes, **caracterisée en ce que** le collage est éxecuté à une temperature comprise entre 0 et 50°C.

11. Utilisation de protéines d'origine végétale selon la revendication 10), **caracterisée en ce que** le collage est executé a une température comprise entre 10 et 35° C.

12. Utilisation de protéines d'origine végétale selon les revendications 10) et 11), **caracterisée en ce que** le collage est executé aux températures naturelles des caves (température ambiante).

13. Utilisation de protéines d'origine végétale selon l'une quelconque des revendication 1) à 12), **caracterisée en ce que** les protéines sont ajoutées en tant que solution ou suspension aqueuse.

14. Utilisation de protéines d'origine végétale pour le collage des boissons d'origine végétale et leurs derivés fermentés correspondants, **caracterisée en ce que** l'on utilise un mélange de protéines extraites de céreales.

15. Utilisation de protéines d'origine végétale selon l'une quelconque des revendications précédentes, **caracterisée en ce que** ladite boisson est choisie dans le groupe constitué de : moût, vin, vinaigre, jus de fruits et bière.

16. Utilisation de protéines d'origine végétale selon la revendication 15), **caracterisée en ce que** ladite boisson est un vin.

## Patentansprüche

1. Verwendung von Proteinen pflanzlichen Ursprungs zur Klärung von Getränken pflanzlichen Ursprungs un ihren entsprechenden fermentierten Derivaten, **dadurch gekennzeichnet, daß** die genannten Proteine Extrakte von Leguminosen sind.

2. Verwendung von Proteinen nach Anspruch 1), **dadurch gekennzeichnet, daß** die genannten Leguminosen ausgewählt sind aus der Gruppe bestehend aus Soja, grüne Bohne, Bohne, Lupine, Luzerne und Erbse.

3. Verwendung von Proteinen pflanzlichen Ursprungs zur Klärung von Getränken pflanzlichen Ursprungs und ihren entsprechenden fermentierten Derivaten, **dadurch gekennzeichnet, daß** die genannten Proteine Extrakte von Pflanzen ausgewälte sind aus der Gruppe hostehend aus Raps, Sonnenblume und Loin.

4. Verwendung von Proteinen pflanzlichen Ursprungs zur Klärung von Getränken pflanzlichen Ursprungs und ihren entsprechenden fermentierten Derivaten, **dadurch gekennzeichnet, daß** die genannten Proteine Extrakte von Knollen sind.

5. Verwendung von Proteinen nach Anspruch 4), **dadurch gekennzeichnet, daß** die genannten Knolle Kartoffel sind.

6. Verwendung von Proteinen pflanzlichen Ursprungs zur Klärung von Getränken pflanzlichen Ursprungs und ihren entsprechenden fermentierten Derivaten, **dadurch gekennzeichnet, daß** die genannten Proteine Extrakte von Früchten sind.

7. Verwendung von Protein nach Anspruch 6), **dadurch gekennzeichnet, daß** die genannten Früchte ausgewählt sind aus der Gruppe bestehend aus Trauben.

8. Verwendung von Proteinen pflanzlichen Ursprungs nach einem der Ansprüche 1) bis 7), **dadurch gekennzeichnet, daß** die genannten Proteine vorher hydrolysiert oder denaturiert sein können.

9. Verwendung von Proteinen pflanzlichen Ursprungs nach einem der Ansprüche 1) bis 8), **dadurch gekennzeichnet, daß** die genannten Proteine als eine Mischung von zwei oder mehr Proteinen derselben Sorte verwendet werden.

10. Verwendung von Proteinen pflanzlichen Ursprungs nach einem der voranstehenden Ansprüche, **dadurch gekennzeichnet, daß** die Klärung bei einer Temperatur von zwischen 0 und 50°C (je einschließlich) durchgeführt wird.

11. Verwendung von Proteinen pflanzlichen Ursprungs nach Anspruch 10), **dadurch gekennzeichnet, daß** die Klärung bei einer Temperatur von zwischen 10 und 35°C (je einschließlich) durchgeführt wird.

12. Verwendung von Proteinen pflanzlichen Ursprungs nach den Ansprüchen 10) und 11), **dadurch gekennzeichnet, daß** die Klärung bei natürlichen Kellertemperaturen (Raumtemperatur) durchgeführt wird.

13. Verwendung von Proteinen pflanzlichen Ursprungs nach einem der Ansprüche 1) bis 12), **dadurch gekennzeichnet, daß** die Proteine als eine Lösung oder wässrige Suspension hinzugefügt werden.

14. Verwendung von Proteinen pflanzlichen Ursprungs zur Klärung von Getränken pflanzlichen Ursprungs und ihren entsprechenden fermentierten Derivaten, **dadurch gekennzeichnet, daß** ein Gemisch von Proteinen, die Extrakte von Getreiden sind, verwendet wird.

15. Verwendung von Proteinen pflanzlichen Ursprungs nach einem der voranstehenden Ansprüche, **dadurch gekennzeichnet, daß** das bezeichnete Getränk ausgewählt ist aus der Gruppe bestehend aus Most, Wein, Essig, Fruchtsaft und Bier.

16. Verwendung von Proteinen pflanzlichen Ursprungs nach Anspruch 15), **dadurch gekennzeichnet, daß** das bezeichnete Getränk ein Wein ist.

## Claims

1. Use of proteins of vegetal origin to clarify beverages of vegetal origin and their corresponding fermented derivatives, **characterised in that** said proteins are leguminous extracts.

2. Use of proteins as in claim 1), **characterised in that** said legumes are selected in the group formed by soybean, beans, broad beans, lupin, lucerne, peas.

3. Use of proteins of vegetal origin to clarify beverages of vegetal origin and their corresponding fermented derivatives, **characterised in that** said proteins are vegetable extracts selected in the group formed by rape, sunflower, linseed.

4. Use of proteins of vegetal origin to clarify beverages of vegetal origin and their corresponding fermented derivatives, **characterised in that** said proteins are bulb extracts.

5. Use of proteins as in claim 4), **characterised in that** said bulbs are potatoes.

6. Use of proteins of vegetal origin to clarify beverages of vegetal origin and their corresponding fermented derivatives, **characterised in that** said proteins are fruit extracts.

7. Use of proteins as in claim 6), **characterised in that** said fruits are selected in the group formed by grapes.

8. Use of proteins of vegetal origin as in any one of claims 1) to 7), **characterised in that** said proteins are first of all hydrolysed or denatured.

9. Use of proteins of vegetal origin as in any one of claims 1) to 8), **characterised in that** said proteins are used by mixing two or more proteins of the same type.

10. Use of proteins of vegetal origin as in any one of the previous claims, **characterised in that** the clarification is carried out at a temperature between 0 and 50°C.

11. Use of proteins of vegetal origin as in claim 10), **characterised in that** said clarification is carried out at a temperature between 10 and 35°C.

12. Use of proteins of vegetal origin as in claims 10) and 11), **characterised in that** the clarification is carried out at the natural temperatures of the cellars (room temperature).

13. Use of proteins of vegetal origin as in any one of claims 1) to 12), **characterised in that** the proteins are added as a solution or water suspension.

14. Use of proteins of vegetal origin to clarify beverages of vegetal origin and their corresponding fermented derivatives, **characterised in that** use is made of a mixture of proteins extracted from cereal extracts.

15. Use of proteins of vegetal origin as in any one of the previous claims, **characterised in that** said beverage is selected in the group formed by: must, wine, vinegar, fruit juice and beer.

16. Use of proteins of vegetal origin as in claim 15), **characterised in that** said beverage is a wine.
